(19) Europäisches Patentamt
European Patent Office
Office européen des brevets

(11) **EP 4 049 786 A1**

(12) **EUROPÄISCHE PATENTANMELDUNG**

(43) Veröffentlichungstag:
**31.08.2022 Patentblatt 2022/35**

(21) Anmeldenummer: **21159594.7**

(22) Anmeldetag: **26.02.2021**

(51) Internationale Patentklassifikation (IPC):
**B23Q 39/02** *(2006.01)* **B23F 5/16** *(2006.01)*
**B23F 21/00** *(2006.01)*

(52) Gemeinsame Patentklassifikation (CPC):
**B23F 5/163; B23F 5/166; B23Q 39/026**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **PITTLER T&S GmbH**
**63128 Dietzenbach (DE)**

(72) Erfinder:
• **BRUMM, Markus**
**50226 Frechen (DE)**

• **GACKA, Adam**
**64367 Mühltal (DE)**
• **LUX, Maximilian**
**63110 Rodgau (DE)**
• **PÖSCHEL, Martin**
**60486 Frankfurt am Main (DE)**

(74) Vertreter: **Weilnau, Carsten et al**
**Patentanwälte Sturm Weilnau Franke**
**Partnerschaft mbB**
**Unter den Eichen 5 (Haus C-Süd)**
**65195 Wiesbaden (DE)**

(54) **VORRICHTUNG UND VERFAHREN ZUR BEARBEITUNG EINES WERKSTÜCKS**

(57) Die vorliegende Erfindung betrifft eine Vorrichtung, ein Verfahren und ein Computerprogrammprodukt zur Bearbeitung, insbesondere zur Verzahnung eines Werkstücks, wobei die Vorrichtung (1) folgendes umfasst:
- eine Basis (2),
- eine um eine erste Achse (z) drehbar gelagerte Werkstückspindel (4) zur Aufnahme des Werkstücks (5),
- einen ersten Bearbeitungskopf (11) mit einer bezüglich einer ersten Werkzeugachse (18) drehbar gelagerten ersten Werkzeugspindel (12) zur Aufnahme eines ersten Bearbeitungswerkzeugs (30),
- einen zweiten Bearbeitungskopf (21) zur Aufnahme eines zweiten Bearbeitungswerkzeugs (40),
- wobei zumindest der mit dem ersten Bearbeitungswerkzeug (30) bestückbare erste Bearbeitungskopf (11) zur Wälzschälbearbeitung des Werkstücks (5) ausgebildet ist, und
- wobei der zweite Bearbeitungskopf (21) relativ zum ersten Bearbeitungskopf (11) und unabhängig vom ersten Bearbeitungskopf (11) variabel positionierbar und/oder variabel ausrichtbar ist.

Fig. 4

**Beschreibung**

Technisches Gebiet

Die vorliegende Erfindung betrifft eine Vorrichtung, ein Verfahren und ein Computerprogrammprodukt zur Bearbeitung, insbesondere zur Verzahnung eines Werkstücks, so etwa zur mehrfachen gleichzeitigen verzahnenden Bearbeitung eines Werkstücks.

Hintergrund

Für die Fertigung und Bearbeitung von Zahnrädern ist die sogenannte Wälzschälbearbeitung im Stand der Technik hinreichend bekannt. Hierbei wird ein verzahntes oder zu verzahnendes Werkstück mit einer Werkstückspindel um eine Werkstückachse gedreht. Ein Wälzschälwerkzeug oder ein Wälzfräser wird alsdann unter einem vorgegebenen Winkel relativ zur Drehachse des Werkstücks gedreht und gelangt mit dem Werkstück spanabhebend in Eingriff.

Beim Wälzschälen wird eine gekoppelte Bewegung des Wälzschälwerkzeugs in Bezug zur Bewegung des Werkstücks ausgeführt. Die Drehachse des Werkzeugs und die Drehachse des Werkstücks sind hierbei relativ zueinander um den sogenannten Achskreuzwinkel geneigt ausgerichtet. Die Rotationsachse des Werkzeugs verläuft insbesondere windschief zur Rotationsachse des Werkstücks.

Das Wälzschälen vereint das sogenannte Wälzfräsen und -stoßen durch kontinuierliches Abwälzen des Werkzeugs mit einem axialen Vorschub gegenüber dem Werkstück. Die gekreuzte, mithin windschiefe Anordnung der Achsen von Werkzeug und Werkstück bewirkt eine Relativgeschwindigkeit zwischen dem rotierenden Werkzeug und dem rotierenden Werkstück. Diese Relativbewegung wird als Schnittbewegung ausgenutzt und hat ihre Hauptschnittrichtung entlang der Zahnlücke des Werkstücks. Die Größe der Schnittgeschwindigkeit ist dabei von der Größe des Achskreuzwinkels und von der Drehzahl des Werkzeugs bzw. des Werkstücks abhängig.

Soll ein Werkstück beispielsweise mit mehreren, etwa unterschiedlichen Verzahnungen versehen werden, so bedingt dies typischerweise zumindest zwei nacheinander ablaufende verzahnende Bearbeitungsschritte, insbesondere dann, wenn die beiden Verzahnungen unterschiedlich sind. Es ist hierbei typischerweise vorgesehen, die beiden Verzahnungen nacheinander im oder am Werkstück zu fertigen. Mittels eines ersten Werkzeugs kann beispielsweise eine erste Verzahnung in das Werkstück eingebracht werden. Nach einer Umrüstung einer Verzahnmaschine kann alsdann in einem nachfolgenden Schritt eine zweite Verzahnung in dasselbe Werkstück eingebracht werden. Sofern das Werkstück mit ein und derselben Verzahnmaschine bearbeitet werden soll, ist hierbei eine Umrüstung, beispielsweise ein Werkzeugwechsel der entsprechenden Verzahnmaschine erforderlich.

Zur Erzeugung mehrerer oder unterschiedlicher Verzahnungen eines Werkstücks ist es ferner denkbar, zur Herstellung zweier Verzahnungen an ein und demselben Werkstück zumindest zwei Verzahnmaschinen bereitzustellen, welche jeweils mit einem für die jeweilige Verzahnung vorgesehenen Werkzeug bestückt sind. Eine erste Verzahnung des Werkstücks kann alsdann mit einer ersten Verzahnmaschine hergestellt werden. Das Werkstück kann alsdann von der ersten Verzahnmaschine an die zweite Verzahnmaschine übergeben werden. Für die Herstellung der zweiten Verzahnung wird alsdann die zweite Verzahnmaschine verwendet.

Kurzum, für die spanabhebende Herstellung mehrerer Verzahnung an ein und demselben Werkstück ist es entweder erforderlich, eine Verzahnmaschine umzurüsten oder das betreffende Werkstück mit unterschiedlichen Verzahnmaschinen zu bearbeiten. Dies geht zwangsläufig mit einem Umrüsten der Verzahnmaschine und/oder mit einem Ausspannen und Einspannen des Werkstücks an einer oder mehreren Verzahnmaschine einher. Wird für das Werkstück gefordert, dass eine erste Verzahnung und eine zweite Verzahnung in einem festen, bzw. zuvor definierten Bezug zueinander stehen, kann dies mit den gegenwärtig zur Verfügung stehenden Verfahren und Vorrichtungen wegen des beschriebenen Umrüstens der Verzahnmaschine oder des Umspannens des Werkstücks nur bedingt, oder nur mit einem vergleichsweise hohen Aufwand (z.B. durch Messen der Zahnposition) beim Umrüsten oder Umspannen erreicht werden.

Es ist insoweit Zielsetzung der vorliegenden Erfindung, eine Vorrichtung zur Verzahnung eines Werkstücks sowie ein entsprechendes Verfahren bereitzustellen, mit welchen verzahnte Werkstücke, insbesondere Werkstücke mit mehreren Verzahnungen in möglichst kurzer Bearbeitungszeit in hoher Qualität und mit einem hohen Maß an Präzision gefertigt werden können. Es ist dabei insbesondere Zielsetzung, einen massenfertigungstauglichen Prozess und eine dementsprechende Vorrichtung bereitzustellen, bei welchen die Taktzyklen für die Herstellung mehrere Verzahnungen gegenüber bekannten Lösungen verkürzt werden können.

Diese Aufgabe wird mit einer Vorrichtung, mit einem Verfahren und mit einem Computerprogramm gemäß den Merkmalen der unabhängigen Patentansprüche gelöst. Vorteilhafte Ausgestaltungen sind dabei Gegenstand jeweils abhängiger Patentansprüche.

Nach einem ersten Aspekt ist insoweit eine Vorrichtung zur Bearbeitung, insbesondere zur Verzahnung eines Werkstücks vorgesehen. Die Vorrichtung umfasst eine Basis sowie eine um eine erste Achse drehbar gelagerte Werkstückspindel zur Aufnahme des Werkstücks. Mittels der Werkstückspindel ist das Werkstück um die erste Achse (A) drehbar an der Basis gelagert.

Die Vorrichtung umfasst ferner einen ersten Bearbeitungskopf mit einer bezüglich einer ersten Werkzeugachse drehbar gelagerten ersten Werkzeugspindel. Der erste Bearbeitungskopf, bzw. dessen erste Werkzeugspindel ist zur Aufnahme eines ersten Bearbeitungswerkzeugs ausgebildet und hierfür vorgesehen. Das erste Bearbeitungswerkzeug ist mittels der ersten Werkzeugspindel bezüglich der ersten Werkzeugachse drehbar am Bearbeitungskopf lagerbar. Das an der Werkzeugspindel zu montierende erste Bearbeitungswerkzeug kann bezüglich der ersten Werkzeugachse drehbar am Bearbeitungskopf gelagert sein.

Die Vorrichtung umfasst ferner einen zweiten Bearbeitungskopf zur Aufnahme eines zweiten Bearbeitungswerkzeugs.

Zumindest der mit dem ersten Bearbeitungswerkzeug bestückbare erste Bearbeitungskopf ist zur Wälzschälbearbeitung des Werkstücks ausgebildet. Bei dem Bearbeitungswerkzeug handelt es sich dabei typischerweise um ein Wälzschälbearbeitungswerkzeug, beispielsweise um ein Wälzschälrad.

Der zweite Bearbeitungskopf ist relativ zum ersten Bearbeitungskopf und unabhängig vom ersten Bearbeitungskopf variabel positionierbar und/oder variabel ausrichtbar. Mit anderen Worten kann die Position und/oder die Ausrichtung des zweiten Bearbeitungskopfs relativ zum ersten Bearbeitungskopf variabel verändert werden.

Die variable Positionierbarkeit und/oder Ausrichtbarkeit des zweiten Bearbeitungskopfs relativ zum ersten Bearbeitungskopf kann stufenlos variabel sein. Es ist ferner denkbar, dass der zweite Bearbeitungskopf nicht nur relativ zum ersten Bearbeitungskopf, sondern auch relativ zur Basis hinsichtlich seiner Position und/oder Ausrichtung variabel ausrichtbar oder positionierbar ist. Typischerweise ist vorgesehen, dass sowohl der erste Bearbeitungskopf als auch der zweite Bearbeitungskopf relativ zur Basis variabel positionierbar und/oder variabel ausrichtbar sind. Insbesondere kann jeder der beiden Bearbeitungsköpfe unabhängig vom jeweils anderen Bearbeitungskopf variabel positioniert und/oder variabel ausgerichtet werden.

Dies ermöglicht es insbesondere, dass während einer Wälzschälbearbeitung mittels des ersten Bearbeitungswerkzeugs das zweite Bearbeitungswerkzeug mittels des zweiten Bearbeitungskopfs für vielfältige anderweitige Bearbeitungsschritte zur Bearbeitung des Werkstücks verwendet werden kann. Durch die variable Positionierbarkeit und/oder Ausrichtbarkeit von erstem und/oder zweitem Bearbeitungskopf kann insbesondere eine gleichzeitige oder synchrone Bearbeitung des Werkstücks mit dem ersten, am ersten Bearbeitungskopf gelagerten Bearbeitungswerkzeug und auch mit dem zweiten Bearbeitungswerkzeug erfolgen, welches am zweiten Bearbeitungskopf angeordnet ist.

Durch die variable Positionierbarkeit und/oder durch die variable Ausrichtbarkeit des zweiten Bearbeitungskopfs relativ zum ersten Bearbeitungskopf und/oder relativ zur Basis kann der zweite Bearbeitungskopf, bzw. dessen zweites Bearbeitungswerkzeug vielfältigst für die Bearbeitung des Werkstücks, beispielsweise für ein Entgraten, Fräsen oder Wälzschälen eingesetzt werden, während das erste Bearbeitungswerkzeug mit dem Werkstück in einem Bearbeitungseingriff steht.

Auf diese Art und Weise kann eine besonders effiziente Bearbeitung des Werkstücks erreicht werden. Taktzeiten oder Taktzyklen können dementsprechend verkürzt werden. Zudem kann durch die gleichzeitige Bearbeitung des Werkstücks mit dem ersten und dem zweiten Bearbeitungswerkzeug die Präzision der Fertigung des Werkstücks gesteigert werden. Die gleichzeitig oder zumindest zeitlich teilweise überlappend stattfindenden ersten und zweiten Bearbeitungsprozesse, welche mit dem ersten und dem zweiten Bearbeitungswerkzeug durchführbar sind, erfordern weder ein Umrüsten der Vorrichtung noch ein Umspannen des Werkstücks.

Nach einer weiteren Ausgestaltung ist der zweite Bearbeitungskopf relativ zum ersten Bearbeitungskopf frei positionierbar und/oder frei ausrichtbar. Gleichermaßen kann der zweite Bearbeitungskopf, wie auch der erste Bearbeitungskopf gegenüber der Basis frei positionierbar und/oder frei ausrichtbar ausgestaltet, bzw. gelagert oder beweglich implementiert sein. Unter einer freien Positionierbarkeit und/oder freien Ausrichtbarkeit ist hierbei eine Ausrichtung, bzw. Positionierung hinsichtlich sämtlicher Raumachsen und Drehachsen im Raum gemeint.

So kann der zweite Bearbeitungskopf typischerweise hinsichtlich drei Bewegungsfreiheitsgraden und drei Rotationsfreiheitsgraden relativ zum ersten Bearbeitungskopf und/oder relativ zur Basis bewegt oder verschwenkt bzw. gedreht werden. Ferner kann eine stufenlose freie Positionierbarkeit und/oder eine stufenlose freie Ausrichtbarkeit für den zweiten Bearbeitungskopf relativ zum ersten Bearbeitungskopf, aber auch entsprechend für den ersten Bearbeitungskopf relativ zum zweiten Bearbeitungskopf als auch für beide Bearbeitungsköpfe relativ zur Basis bereitgestellt werden. Hierdurch kann ein Maximum an Flexibilität bei Verwendung der Vorrichtung und zur Umsetzung eines entsprechenden Verfahrens zur Bearbeitung, bzw. Verzahnung eines Werkstücks bereitgestellt werden.

Mittels der relativ zueinander frei positionierbaren und/oder frei ausrichtbaren ersten und zweiten Bearbeitungsköpfe sowie einer Positionierbarkeit und/oder Ausrichtbarkeit eines jeden Bearbeitungskopfs unabhängig vom jeweils anderen Bearbeitungskopf können mittels der Bearbeitungsköpfe und den daran vorgesehenen Bearbeitungswerkzeugen voneinander unabhängige Bearbeitungsprozesse gleichzeitig am Werkstück vorgenommen werden.

Nach einer weiteren Ausgestaltung sind der erste Bearbeitungskopf und der zweite Bearbeitungskopf bezüglich einer ersten Richtung (x) unabhängig voneinander verschiebbar an der Basis angeordnet. Für die verschiebbare Anordnung der Bearbeitungsköpfe kann aufseiten eines jeden der Bearbeitungsköpfe eine eigene Schiebeführung vorgesehen sein. Es kann sich hierbei um eine stufenlose Schiebeführung handeln, die typischerweise mit einem Antrieb, vorzugsweise mit einem ersten elektrischen Antrieb gekoppelt ist. Infolge einer Aktivierung oder Steuerung des ersten elektrischen Antriebs kann der betreffende Bearbeitungskopf bezüglich der ersten Richtung relativ zur Basis verschoben bzw. bewegt werden. Es ist hierbei insbesondere vorgesehen, dass sowohl der erste Bearbeitungskopf als auch der zweite Bearbeitungskopf jeweils mit einem ersten eigenen Antrieb versehen sind, sodass durch entsprechende Aktivierung oder Ansteuerung der Antriebe des ersten und des zweiten Bearbeitungskopfs dementsprechende Verschiebebewegungen relativ zueinander als auch relativ zur Basis vollzogen werden können.

Nach einer weiteren Ausgestaltung sind der erste Bearbeitungskopf und der zweite Bearbeitungskopf bezüglich einer zweiten Richtung (y) unabhängig voneinander verschiebbar an der Basis angeordnet. Auch hier kann für die verschiebbare Anordnung der Bearbeitungsköpfe kann aufseiten eines jeden der Bearbeitungsköpfe eine eigene Schiebeführung vorgesehen sein. Es kann sich hierbei um eine stufenlose Schiebeführung handeln, die typischerweise mit einem Antrieb, vorzugsweise mit einem zweiten elektrischen Antrieb gekoppelt ist. Infolge einer Aktivierung oder Steuerung des zweiten elektrischen Antriebs kann der betreffende Bearbeitungskopf bezüglich der zweiten Richtung relativ zur Basis verschoben bzw. bewegt werden. Es ist hierbei insbesondere vorgesehen, dass sowohl der erste Bearbeitungskopf als auch der zweite Bearbeitungskopf jeweils mit einem eigenen zweiten Antrieb versehen sind, sodass durch entsprechende Aktivierung oder Ansteuerung der Antriebe des ersten und des zweiten Bearbeitungskopfs dementsprechende Verschiebebewegungen relativ zueinander als auch relativ zur Basis vollzogen werden können.

Nach einer weiteren Ausgestaltung sind der erste Bearbeitungskopf und der zweite Bearbeitungskopf bezüglich einer dritten Richtung (z) unabhängig voneinander verschiebbar an der Basis angeordnet. Auch hier kann für die verschiebbare Anordnung der Bearbeitungsköpfe aufseiten eines jeden der Bearbeitungsköpfe eine eigene Schiebeführung vorgesehen sein. Es kann sich hierbei um eine stufenlose Schiebeführung handeln, die typischerweise mit einem Antrieb, vorzugsweise mit einem dritten elektrischen Antrieb gekoppelt ist. Infolge einer Aktivierung oder Steuerung des dritten elektrischen Antriebs kann der betreffende Bearbeitungskopf bezüglich der dritten Richtung relativ zur Basis verschoben bzw. bewegt werden. Es ist hierbei insbesondere vorgesehen, dass sowohl der erste Bearbeitungskopf als auch der zweite Bearbeitungskopf jeweils mit einem eigenen dritten Antrieb versehen sind, sodass durch entsprechende Aktivierung oder Ansteuerung der Antriebe des ersten und des zweiten Bearbeitungskopfs dementsprechende Verschiebebewegungen relativ zueinander als auch relativ zur Basis vollzogen werden können.

Nach einer weiteren Ausgestaltung ist der erste Bearbeitungskopf bezüglich einer im Wesentlichen senkrecht zur ersten Werkzeugachse verlaufenden ersten Schwenkachse schwenkbar gelagert. Der erste Bearbeitungskopf kann insbesondere bezüglich der Basis schwenkbar gelagert sein. Es ist ferner denkbar, dass der erste Bearbeitungskopf an einem ersten, beweglich an der Basis gelagerten Träger angeordnet ist. Die Schwenkachse kann stationär am Träger ausgebildet sein, sodass der erste Bearbeitungskopf bezüglich der ersten Schwenkachse schwenkbar am ersten Träger gelagert ist. Die schwenkbare Lagerung des ersten Bearbeitungskopfs bezüglich der ersten Schwenkachse gepaart mit der verschiebbaren Beweglichkeit des ersten Bearbeitungskopfs bezüglich der ersten Richtung, der zweiten Richtung und/oder der dritten Richtung ermöglicht es, jedwede geforderte Ausrichtung des Bearbeitungswerkzeugs bzw. der Werkzeugachse einzustellen.

Nach einer weiteren Ausgestaltung ist der zweite Bearbeitungskopf bezüglich einer im Wesentlichen senkrecht zur zweiten Werkzeugachse verlaufenden zweiten Schwenkachse schwenkbar gelagert. Der zweite Bearbeitungskopf kann insbesondere bezüglich der Basis schwenkbar gelagert sein. Es ist ferner denkbar, dass der zweite Bearbeitungskopf an einem zweiten, beweglich an der Basis gelagerten Träger angeordnet ist. Die Schwenkachse kann stationär am Träger ausgebildet sein, sodass der zweite Bearbeitungskopf bezüglich der zweiten Schwenkachse schwenkbar am zweiten Träger gelagert ist. Die schwenkbare Lagerung des zweiten Bearbeitungskopfs bezüglich der zweiten Schwenkachse gepaart mit der verschiebbaren Beweglichkeit des zweiten Bearbeitungskopfs bezüglich der ersten Richtung, der zweiten Richtung und/oder der dritten Richtung ermöglicht es, jedwede geforderte Ausrichtung des Bearbeitungswerkzeugs bzw. der Werkzeugachse einzustellen.

Nach einer weiteren Ausführungsform ist der erste Bearbeitungskopf mit dem ersten Bearbeitungswerkzeug mit einem ersten Abschnitt des Werkstücks in Eingriff bringbar. Der zweite Bearbeitungskopf ist mit dem zweiten Bearbeitungswerkzeug mit einem zweiten Abschnitt des Werkstücks gleichzeitig oder zumindest zeitlich überlappend in Eingriff bringbar. Der erste Abschnitt und der zweite Abschnitt des Werkstücks sind dabei, bezogen auf die erste Achse axial und/oder radial versetzt zueinander. Mit anderen Worten gelangen die ersten und zweiten Bearbeitungswerkzeuge des ersten und des zweiten Bearbeitungskopfs zwar gleichzeitig, aber räumlich nicht überlappend mit unterschiedlichen Abschnitten des Werkstücks in Eingriff. Auf diese Art und Weise können aber räumlich voneinander getrennte Abschnitte oder Sektionen des Werkstücks gleichzeitig mit dem ersten Bearbeitungswerkzeug und mit dem zweiten Bearbeitungswerkzeug bearbeitet werden.

Nach einer weiteren Ausgestaltung weist der zweite Bearbeitungskopf eine zweite, drehbar gelagerte Werkzeugspindel zur Aufnahme des zweiten Bearbeitungswerkzeugs auf. Der zweite Bearbeitungskopf kann im Wesentlichen identisch oder symmetrisch zum ersten Bearbeitungskopf ausgebildet sein. Insoweit ist denkbar, dass der erste Bearbeitungskopf und der zweite Bearbeitungskopf, mithin die daran drehbar gelagerten ersten und zweiten Bearbeitungswerkzeuge zur gleichzeitigen wälzschälenden Bearbeitung ein und desselben Werkstücks ausgebildet sind.

Nach einer weiteren Ausgestaltung der Vorrichtung ist der mit dem zweiten Bearbeitungswerkzeug bestückbare zweite Bearbeitungskopf zur Wälzschälbearbeitung des Werkstücks ausgebildet.

Insoweit kann insbesondere der mit dem ersten Bearbeitungswerkzeug bestückte Bearbeitungskopf zur Durchführung eines ersten Wälzschälprozesses den ersten Abschnitt des Werkstücks bearbeiten, während gleichzeitig oder zeitlich überlappend das zweite Bearbeitungswerkzeug mittels des zweiten Bearbeitungskopfs eine zweite Bearbeitung des zweiten Abschnitts des Werkstücks vornimmt.

Bei dem ersten, vom ersten Bearbeitungskopf durchführbaren Bearbeitungsprozess als auch bei dem zweiten, vom zweiten Bearbeitungskopf gleichzeitig oder zeitlich überlappend durchführbaren Bearbeitungsprozess kann es sich dabei jeweils um einen Wälzschälprozess, bzw. um eine wälzschälende Bearbeitung des Werkstücks handeln.

Insoweit ist nach einer weiteren Ausführungsform vorgesehen, dass der erste Bearbeitungskopf und der zweite Bearbeitungskopf zur gleichzeitigen Wälzschälbearbeitung des Werkstücks ausgebildet sind. Die gleichzeitige oder zumindest zeitlich überlappende Wälzschälbearbeitung des Werkstücks bezieht sich hierbei auf räumlich nicht überlappende bzw. überlappungsfreie erste und zweite Abschnitte des Werkstücks, die typischerweise axial und/oder radial voneinander beabstandet sind.

Jene ersten und zweiten Abschnitte des Werkstücks können dabei zu ein und derselben Verzahnung aber auch zu unterschiedlichen Verzahnungen gehören. Die Vorrichtung, insbesondere ihre beiden Bearbeitungsköpfe und ihre jeweiligen daran vorgesehene Bearbeitungswerkzeuge können insoweit zur gleichzeitigen, bzw. zeitlich überlappenden Bearbeitung, bzw. Verzahnung ein und desselben verzahnten oder zu verzahnenden Abschnitts des Werkstücks vorgesehen sein und dementsprechend verwendet werden.

Gleichermaßen können hier auch unterschiedliche, räumlich nicht überlappende verzahnte oder zu verzahnende Abschnitte, mithin zwei unterschiedliche oder voneinander separierte Verzahnungen oder zu verzahnende Abschnitte des Werkstücks gleichzeitig bearbeitet werden.

So können die beiden Bearbeitungsköpfe in Bezug auf die Drehachse der Werkstückspindel gleichzeitig oder zeitlich überlappend jeweils mit unterschiedlichen ersten und zweiten Abschnitten des Werkstücks in Eingriff stehen, welche bezogen auf die erste Achse radial, axial und/oder in Umfangsrichtung versetzt zueinander am Werkstück vorgesehen sind.

Die Bearbeitungsköpfe und die daran vorgesehenen Bearbeitungswerkzeuge können hierbei zur gleichen Zeit mit ein und demselben bereits verzahnten oder zu verzahnendem Abschnitt des Werkstücks oder mit unterschiedlichen, etwa axial voneinander beabstandeten verzahnten oder zu verzahnenden Abschnitten des Werkstücks in Eingriff stehen.

Nach einer weiteren Ausgestaltung weist die Vorrichtung eine Steuerung zur Steuerung des ersten Bearbeitungskopfs und des zweiten Bearbeitungskopfs auf. Mittels der Steuerung kann insbesondere eine programmgesteuerte Positionierung und/oder Ausrichtung des ersten Bearbeitungskopfs und/oder des zweiten Bearbeitungskopfs erfolgen. Bei einem gleichzeitigen bzw. zeitlich überlappenden Durchführen wälzschälender Bearbeitungsprozesse aufseiten des ersten und des zweiten Bearbeitungskopfs an ein und demselben drehbar an der Werkstückspindel gelagerten Werkstücks sind die ersten und zweiten Bearbeitungsprozesse, welche jeweils vom ersten und zweiten Bearbeitungskopf durchführbar sind, aufeinander abgestimmt bzw. unter Berücksichtigung des jeweiligen Bearbeitungsprozesses miteinander gekoppelt.

Nach einer weiteren Ausführungsform der Vorrichtung ist die Steuerung zur gleichzeitigen Steuerung des ersten und des zweiten Bearbeitungskopfs derart ausgebildet, dass im Hinblick auf die Werkstückbearbeitung folgende Wechselbeziehung gilt:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right),$$

mit:

$n_c$: Drehzahl der Werkstückachse
$n_a$: Drehzahl der 1. Werkzeugspindel
$n_b$: Drehzahl der 2. Werkzeugspindel
$z_a$: Zähnezahl des 1. Wälzschälwerkzeugs
$z_b$: Zähnezahl des 2. Wälzschälwerkzeugs
$z_1$: Zähnezahl der 1. Verzahung des Werkstücks
$z_2$: Zähnezahl der 2. Verzahung des Werkstücks
$v_{z1}$: Vorschubgeschwindigkeit der Axialachse (z) der 1. Werkzeugspindel
$v_{z2}$: Vorschubgeschwindigkeit der Axialachse (z) der 2. Werkzeugspindel

$$u_{dzi} = Axial - Differential - Konstante = \sin\left(\frac{\beta_i}{m_{ni} * \pi}\right); mit\ i = 1, 2$$

wobei i = 1 das erste Wälzschälwerkzeug, bzw. die erste Verzahnung des Werkstücks und i=2 das zweite Wälzschälwerkzeug, bzw. die zweite Verzahnung des Werkstücks bezeichnet und wobei:

$\beta_i$: *Schrägungswinkel der Zähne des Werkstücks i*
$m_{ni}$: *Normalmodul der Verzahnung i*

Der Schrägungswinkel gibt dabei die Neigung oder Schrägung der Zähne der jeweiligen Verzahnung gegenüber der Werkstückachse, bzw. gegenüber der Drehachse an. Er ist somit eine kennzeichnende Größe für eine Schrägverzahnung. Der Normalmodul der Verzahnung ist der Quotient aus dem Teilkreisdurchmesser d und der Zähnezahl z der jeweiligen Verzahnung.

Der erste und der zweite Bearbeitungskopf, insbesondere auch die erste und die zweite, jeweils mit einem Bearbeitungswerkzeug bestückte Werkzeugspindel werden mittels der Steuerung unter Einhaltung der oben genannten Wechselbeziehung angesteuert. Auf diese Art und Weise kann erreicht werden, dass zwei Wälzschälprozesse an ein und demselben Werkstück gleichzeitig, bzw. zumindest zeitlich überlappend durchgeführt werden können. Die dynamischen Steuerungsparameter eines Bearbeitungskopfs sind an die dynamischen Steuerungsparameter des ersten Bearbeitungskopfs anzupassen, bzw. sie sind mittels der Steuerung daran angepasst, wobei die Art der vom ersten Bearbeitungskopf und vom zweiten Bearbeitungskopf herzustellenden oder zu bearbeitenden Verzahnung als auch die Art und Konfiguration der jeweiligen Bearbeitungswerkzeuge zu berücksichtigen sind.

Mit den dynamischen Steuerungsparametern sind hierbei insbesondere die Drehzahl der Bearbeitungswerkzeuge bzw. der jeweiligen Werkzeugspindeln am jeweiligen Bearbeitungskopf, die Vorschubgeschwindigkeit der Bearbeitungswerkzeuge in Axialrichtung zur jeweiligen Werkzeugachse als auch die Vorschubgeschwindigkeit des Bearbeitungswerkzeugs tangential hierzu gemeint.

Ferner ist auch die Drehzahl der Werkstückspindel bzw. die Drehzahl des Werkstücks zu berücksichtigen. Die dynamische und gleichzeitige Ansteuerung erster und zweiter Bearbeitungsköpfe unter Einhaltung der oben genannten Wechselbeziehung ermöglicht es, eine erste Verzahnung in einem ersten Bereich des Werkstücks zu fertigen und zeitgleich, bzw. zeitlich überlappend hierzu, dieselbe erste oder eine zweite Verzahnung in einem zweiten Bereich des Werkstücks zu fertigen. Die Fertigung der ersten und zweiten Verzahnungen kann hierbei parallel bzw. zeitgleich oder zumindest zeitlich überlappend erfolgen. Dies hat eine Verkürzung der Bearbeitungsdauer und der Taktzeit zur Folge.

Dadurch, dass mehrere Abschnitte derselben Verzahnung oder dass unterschiedlichen Verzahnungen mittels einer Vorrichtung gleichzeitig, bzw. zeitlich überlappend gefertigt werden, kann ein erhöhtes Maß an Präzision für die Verzahnungen erreicht werden. So kann für die relative Position und/oder relative Konfiguration, bzw. Zahnstellung der ersten Verzahnung relativ zur zweiten Verzahnung ein gesteigertes Maß an Präzision erreicht werden. Für die Fertigung der ersten und der zweiten Verzahnung ist es nämlich nicht mehr erforderlich, eine entsprechende Verzahnmaschine umzurüsten und/oder das Werkzeug aus einer ersten Werkstückspindel einer ersten Verzahnvorrichtung auszuspannen und in eine zweite Werkstückspindel einer zweiten Verzahnvorrichtung einzuspannen. Jene Umrüst- oder Einspann-Vorgänge gehen stets mit Bauteiltoleranzen einher, da das Umrüsten der Verzahnmaschine und/oder das Umspannen des Werkstücks in der Praxis vergleichsweise stark toleranzbehaftet sind.

Solche geometrischen Abweichungen können mittels der hier vorgesehenen Vorrichtung und dem mit ihr durchführbaren Verfahren weitgehend beseitigt werden. So kann insbesondere eine relative Phase bzw. relative Position und/oder Ausrichtung der ersten Verzahnung gegenüber der zweiten Verzahnung präzise aufeinander abgestimmt werden, nicht zuletzt, da das erste Bearbeitungswerkzeug und das zweite Bearbeitungswerkzeug, mithin der erste und der zweite Bearbeitungskopf in einer festen systemweit bekannten Lagebeziehung zueinander stehen, welche von der Steuerung kontrollierbar bzw. einstellbar ist.

Grundsätzlich wird für die Bearbeitung-bzw. Verzahnvorrichtung verlangt, dass der erste Bearbeitungskopf und der zweite Bearbeitungskopf relativ zueinander variabel positionierbar und/oder variabel zueinander ausrichtbar sind. Des Weiteren ist es erforderlich, dass zumindest der erste Bearbeitungskopf zur Wälzschälbearbeitung des Werkstücks ausgebildet ist. Das heißt, zumindest ist der erste Bearbeitungskopf derart und relativ zur Werkstückspindel positionierbar und/oder ausrichtbar, dass ein geforderter Wälzschälbearbeitungsprozess durchführbar ist.

Hinsichtlich einer freien Positionierbar- und Ausrichtbarkeit der Bearbeitungsköpfe und der Werkstückspindel ergeben sich mitunter unterschiedlichste Ausgestaltungen.

So ist es beispielsweise denkbar, dass die Achse der Werkstückspindel ortsfest an der Basis der Vorrichtung angeordnet ist. Alsdann ist der erste Bearbeitungskopf relativ zur Werkstückspindel variabel positionierbar und/oder variabel ausrichtbar. Gleichermaßen ist hierbei auch der zweite Bearbeitungskopf relativ zur Werkstückspindel und relativ zum ersten Bearbeitungskopf variabel positionierbar und/oder variabel ausrichtbar.

Bei anderen Ausgestaltungen ist beispielsweise aber auch denkbar, dass einer der Bearbeitungsköpfe stationär angeordnet oder hinsichtlich eines oder mehrerer Bewegungsfreiheitsgrade zugunsten der Beweglich- oder Ausrichtbarkeit der Werkzeugspindel eingeschränkt wird. Beispielsweise ist denkbar, dass der erste Bearbeitungskopf stationär an der Basis fixiert ist und dass stattdessen die Werkzeugspindel relativ zum ersten Bearbeitungskopf variabel positionierbar und/oder variabel ausrichtbar ist.

Die Einschränkung eines Bewegungsfreiheitsgrad eines der Bearbeitungsköpfe kann mit einer hierzu korrespondierenden Erhöhung des betreffenden Bewegungsfreiheitsgrads der Werkzeugspindel oder des jeweils anderen Bearbeitungskopf einhergehen.

Für die Verwirklichung der erfindungsgemäßen Vorrichtung ist es lediglich maßgebend, dass der erste Bearbeitungskopf relativ zur Werkstückspindel derart variabel positionierbar und/oder variabel ausrichtbar ist, dass eine Wälzschälbearbeitung des an der Werkstückspindel drehbar gelagerten Werkstücks mittels des ersten Bearbeitungskopfs und des daran vorgesehenen ersten Bearbeitungswerkzeugs erfolgen kann. Weiterhin wird hierbei gefordert, dass der zweite Bearbeitungskopf relativ zum ersten Bearbeitungskopf und unabhängig vom ersten Bearbeitungskopf variabel positionierbar und/oder variabel ausrichtbar ist.

Nach einem weiteren Aspekt betrifft die vorliegende Erfindung ferner ein Verfahren zur Bearbeitung, insbesondere zur Verzahnung eines Werkstücks. Das Verfahren umfasst die Schritte des Anordnens eines zu bearbeitenden, insbesondere zu verzahnenden Werkstücks an einer um eine erste Achse drehbar gelagerten Werkstückspindel einer Vorrichtung zur Werkstückbearbeitung. Nach einem weiteren Schritt ist vorgesehen, dass zumindest ein erster Abschnitt des Werkstücks mittels eines ersten Bearbeitungswerkzeugs, welches an einer ersten Werkzeugspindel eines ersten Bearbeitungskopfs der Vorrichtung zur Werkstückverzahnung angeordnet ist, wälzschälend bearbeitet wird. Mithin findet ein erster wälzschälender Bearbeitungsprozess am Werkstück statt, welcher mittels des ersten Bearbeitungswerkzeugs bzw. mittels des ersten Bearbeitungskopfs der Vorrichtung durchführbar ist.

Gleichzeitig wird ein zweiter Abschnitt des Werkstücks mittels eines zweiten Bearbeitungswerkzeugs bearbeitet. Das zweite Bearbeitungswerkzeug ist dabei an einem zweiten Bearbeitungskopf derselben Vorrichtung angeordnet, wobei der zweite Bearbeitungskopf relativ zum ersten Bearbeitungskopf und unabhängig vom ersten Bearbeitungskopf variabel positioniert und/oder variabel ausgerichtet wird. Jene variable Positionierung und/oder variable Ausrichtung des zweiten Bearbeitungskopfs, mithin des zweiten Bearbeitungswerkzeugs erfolgt während der wälzschälenden Bearbeitung des Werkstücks mittels des ersten Bearbeitungswerkzeugs, bzw. mittels des zweiten Bearbeitungskopfs. Während der gleichzeitigen Bearbeitung erster und zweiter Abschnitt ein und desselben Werkstücks mittels erster und zweiter Bearbeitungswerkzeuge, werden diese typischerweise mittels der zuvor genannten Steuerung dem jeweiligen Bearbeitungsprozess zufolge relativ zum Werkstück und/oder relativ zueinander bewegt, verschoben und/oder verschwenkt.

Nach einer weiteren Ausführungsform ist das Verfahren zur Verzahnung mit einer zuvor beschriebenen Vorrichtung zur Verzahnung durchführbar und ausführbar. Insoweit gelten sämtliche zur vorbeschriebenen Vorrichtung beschriebenen Merkmale, Vorteile und Wirkungen auch gleichermaßen für das Verfahren zur Verzahnung des Werkstücks; und umgekehrt.

Nach einer weiteren Ausgestaltung des Verfahrens wird der zweite Abschnitt des Werkstücks mittels des zweiten Bearbeitungswerkzeugs, welches an einer zweiten Werkzeugspindel des zweiten Bearbeitungskopfs angeordnet ist, wälzschälend bearbeitet. Insoweit kann eine gleichzeitige, zumindest aber zeitlich partiell überlappende wälzschälende Bearbeitung des ersten und des zweiten Abschnitts des Werkstücks erfolgen.

Nach einem weiteren Verfahren ist dabei vorgesehen, dass der erste Abschnitt und der zweite Abschnitt des Werkstücks, bezogen auf die erste Achse, axial und/oder radial versetzt zueinander sind. Der axiale Versatz bezieht sich hierbei auf die erste Achse, bezüglich welcher die Werkstückspindel drehbar an der Basis gelagert ist. Mithin können axial versetzt zueinander angeordnete oder axial aneinander angrenzende Verzahnungen gleichzeitig in das Werkstück eingearbeitet werden. Es ist ferner möglich, dass der erste Abschnitt des Werkstücks eine Innenverzahnung ist oder aufweist und dass der zweite Abschnitt des Werkstücks eine Außenverzahnung ist oder aufweist.

Es ist hierbei ferner denkbar, dass die beiden Bearbeitungswerkzeuge gleichzeitig zwei unterschiedliche oder aneinander angrenzende Außenverzahnungen im oder am Werkstück erzeugen oder bearbeiten. Ferner können die beiden Bearbeitungswerkzeuge gleichzeitig oder zeitlich versetzt zueinander jeweils eine Innenverzahnung in das Werkstück einarbeiten oder er können erste und zweite Bearbeitungsköpfe, mithin deren Bearbeitungswerkzeuge gleichzeitig eine Innen- und eine Außenverzahnung in das Werkstück erzeugen oder bearbeiten.

Nach einer weiteren Ausführungsform des Verfahrens werden der erste Bearbeitungskopf, die erste Werkzeugspindel, der zweite Bearbeitungskopf, die zweite Werkzeugspindel und die Werkstückspindel mittels einer Steuerung gleichzeitig derart angesteuert, dass folgende Wechselbeziehung gilt:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right).$$

Nach einem weiteren Aspekt betrifft die vorliegende Erfindung ferner ein Computerprogrammprodukt zur Steuerung einer Vorrichtung zur Bearbeitung, bzw. Verzahnung eines Werkstücks, wobei die Vorrichtung vorzugsweise eine Basis sowie eine um eine erste Achse (A) drehbar gelagerte Werkstückspindel zur Aufnahme des Werkstücks, sowie einen ersten und einen zweiten Bearbeitungskopf aufweist. Der erste Bearbeitungskopf weist eine bezüglich einer ersten Werkzeugachse drehbar gelagerte erste Werkzeugspindel zur Aufnahme eines ersten Bearbeitungswerkzeug auf. Der zweite Bearbeitungskopf ist zur Aufnahme eines zweiten Bearbeitungswerkzeugs, typischerweise mittels einer zweiten, bezüglich einer zweiten Drehachse gelagerten Werkzeugspindel ausgebildet.

Typischerweise ist das Computerprogramm zur Steuerung einer zuvor beschriebenen Vorrichtung zur Bearbeitung, bzw. Verzahnung eines Werkstücks, bzw. zur Durchführung des zuvor beschriebenen Verfahrens zur Bearbeitung, bzw. Verzahnung eines Werkstücks ausgebildet.

Das Computerprogrammprodukt umfasst Befehle, die bei der Ausführung des Programms auf einem Computer oder einer Steuerung der Vorrichtung zum Bearbeiten, bzw. zum Verzahnen von Werkstücken den Computer oder die betreffende Steuerung dazu veranlassen, den ersten Bearbeitungskopf mit einem daran angeordneten Bearbeitungswerkzeug wälzschälend mit einem ersten Abschnitt des Werkstücks in Eingriff zu bringen und insoweit einen ersten Wälzschälprozess durchzuführen.

Das Computerprogrammprodukt umfasst weitere Befehle, die bei Ausführung auf dem Computer oder der Steuerung diese dazu veranlassen, einen zweiten Abschnitt des Werkstücks gleichzeitig oder zeitlich überlappend zum ersten Wälzschälprozess mittels eines zweiten Bearbeitungswerkzeugs zu bearbeiten, wobei der zweite Bearbeitungskopf, respektive das zweite Bearbeitungswerkzeug relativ zum ersten Bearbeitungskopf und unabhängig vom ersten Bearbeitungskopf variabel positioniert und/oder variabel und/oder frei ausgerichtet wird.

Es ist dabei insbesondere und nach einer Weiterbildung vorgesehen, dass das Computerprogrammprodukt Programmmittel aufweist, die bei Ausführung des Programms auf dem Computer oder der Steuerung die Bearbeitungs- bzw. Verzahnvorrichtung dazu veranlassen, eine erste Wälzschälbearbeitung zumindest eines ersten Abschnitts des Werkstücks mittels des ersten Bearbeitungswerkzeugs durchzuführen und zeitlich überlappend oder gleichzeitig hierzu eine zweite Wälzschälbearbeitung zumindest eines zweiten Abschnitts des Werkstücks mittels des zweiten Bearbeitungswerkzeugs durchzuführen. Die gleichzeitige oder zeitlich überlappende Durchführung der ersten und zweiten Wälzschälbearbeitungsschritte erfordert eine individuelle Steuerung des ersten und des zweiten Bearbeitungskopf, insbesondere unabhängig voneinander, bzw. nach vorgegebenen Randbedingungen.

So ist nach einer Weiterbildung insbesondere vorgesehen, dass das Computerprogrammprodukt Programmmittel umfasst, welche bei Ausführung auf dem Computer oder der Steuerung der Vorrichtung zur Verzahnung diese dazu veranlassen, die Drehzahl der Werkstückachse, die Drehzahl der ersten Werkzeugspindel, die Drehzahl der zweiten Werkzeugspindel und die Bewegungen der Bearbeitungsköpfe derart zu steuern, dass folgende Wechselbeziehung gilt:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right).$$

Kurzbeschreibung der Figuren

Weitere Ziele, Merkmale sowie vorteilhafte Anwendungsmöglichkeiten der Vorrichtung und des Verfahrens werden anhand der nachfolgenden Beschreibung von Ausführungsbeispielen unter Bezugnahme auf die Figuren erläutert. Hierbei zeigen:

Fig. 1    eine schematische Ansicht eines Ausführungsbeispiels einer Vorrichtung zur Verzahnung eines Werkstücks von vorn betrachtet,

Fig. 2    eine schematische Darstellung der Vorrichtung von der Seite betrachtet,

Fig. 3    eine weitere schematische Darstellung der Vorrichtung von oben betrachtet,

Fig. 4    eine perspektivische Darstellung der Vorrichtung gemäß der Fig. 1 bis 3,

Fig. 5    eine perspektivische Darstellung eines Ausführungsbeispiels, bei welchem zwei Bearbeitungswerkzeuge gleichzeitig mit einem Werkstück in Eingriff stehen,

Fig. 6    eine Darstellung der Fig. 5 von der Seite betrachtet,

Fig. 7    eine weitere Darstellung der Fig. 5 von oben betrachtet,

Fig. 8    eine Darstellung eines weiteren Ausführungsbeispiels, bei welchem erste und zweite Bearbeitungswerkzeuge gleichzeitig mit einer Innenverzahnung eines Werkstücks in Eingriff stehen,

Fig. 9    eine Draufsicht auf die Anordnung gemäß Fig. 8 von oben betrachtet und

Fig. 10    ein Flussdiagramm des Verfahrens zur gleichzeitigen Bearbeitung des Werkstücks mittels einer hier beschriebenen Vorrichtung.

Detaillierte Beschreibung

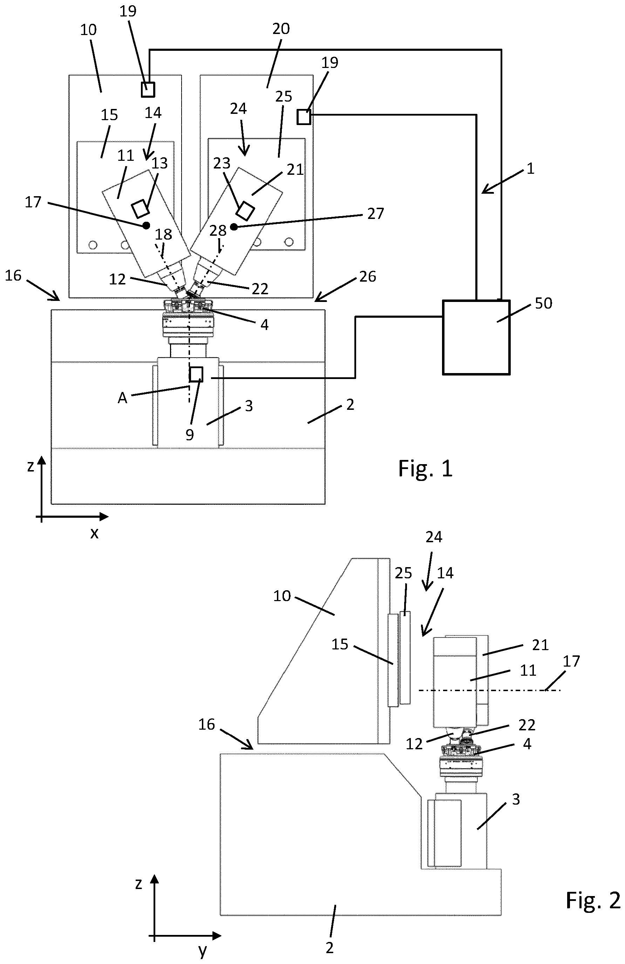

In den Fig. 1 ist eine Ausführungsform einer erfindungsgemäßen Vorrichtung zur Verzahnung eines Werkstücks 5 gezeigt. Die Vorrichtung 1 ist als Verzahnvorrichtung ausgestaltet. Sie weist eine Basis 2 und einen Werkstückträger 3 auf. Der Werkstückträger 3 ist an der ortsfesten Basis 2 angeordnet. An dem Werkstückträger 3 ist eine Werkstückspindel 4 drehbar angeordnet. Die Werkstückspindel 4 ist bezüglich einer ersten Achse (A) drehbar, insbesondere mittels eines Antriebs drehbar antreibbar. Die erste Achse ist demnach auch als Werkstückachse (A) zu bezeichnen. Typischerweise ist die Werkstückspindel 4 mit einem entsprechenden Spindelantrieb 9 ausgestattet, um die Werkstückspindel 4 kontrolliert und regelbar zu drehen. Der Spindelantriebe 9 ist insoweit typischerweise mit einer Steuerung 50 signalübertragend gekoppelt. An der Werkstückspindel 4 ist ein Werkstück 5 lösbar befestigbar, bzw. einspannbar. Mittels der drehbaren Lagerung der Werkstückspindel 4 kann das Werkstück 5 bezüglich der ersten Achse (A) für die Zwecke der Werkstückbearbeitung gedreht werden.

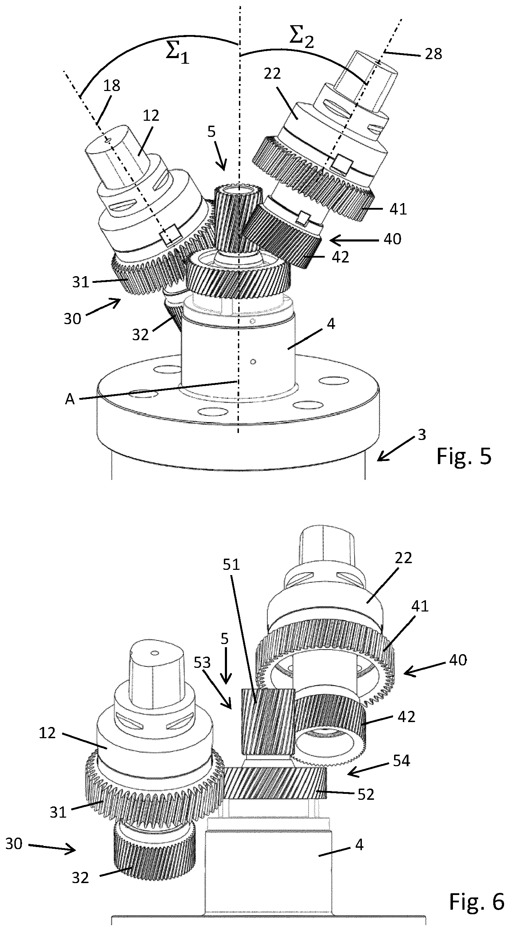

Die Verzahnvorrichtung 1 weist ferner einen ersten Bearbeitungskopf 11 und einen zweiten Bearbeitungskopf 21 auf. An dem ersten Bearbeitungskopf ist eine erste Werkzeugspindel 12 bezüglich einer ersten Werkzeugachse 18 drehbar gelagert. Gleichermaßen ist am zweiten Bearbeitungskopf 21 eine zweite Werkzeugspindel 22 bezüglich einer zweiten Werkzeugachse 28 drehbar gelagert. Die erste und die zweite Werkzeugspindel 12, 22 dienen der Aufnahme entsprechender erster und zweiter Bearbeitungswerkzeuge 30, 40, wie dies beispielsweise im Detail in den Fig. 5 bis 9 gezeigt ist.

Zumindest der erste Bearbeitungskopf 11 ist zur Durchführung einer Wälzschälbearbeitung des Werkstücks 5 ausgebildet. Dementsprechend kann zumindest der erste Bearbeitungskopf 11 von einer Steuerung 50 für die Durchführung eines Wälzschälprozesses angesteuert und dementsprechend relativ zum Werkstück 5 bewegt werden.

In gleicher Art und Weise kann auch der zweite Bearbeitungskopf 21 zur Durchführung eines wälzschälenden Bearbeitungsprozesses ein und desselben Werkstücks 5 ausgebildet sein. Auch der zweite Bearbeitungskopf kann hinsichtlich seiner Position und/oder Ausrichtung von der Steuerung 50 kontrolliert und angesteuert werden. Es ist hierbei insbesondere vorgesehen, dass der erste Bearbeitungskopf 11 und der zweite Bearbeitungskopf 21 grundsätzlich frei positionierbar und/oder frei zueinander ausrichtbar sind. Es ist insbesondere vorgesehen, dass der erste Bearbeitungskopf 11 und der zweite Bearbeitungskopf 21 relativ zueinander variabel positionierbar und/oder variabel zueinander ausrichtbar sind. Dies wird durch die voneinander unabhängige Lagerung und Verschiebung der jeweiligen Bearbeitungsköpfe 11, 21 an der Basis erreicht.

Die voneinander unabhängige freie Positionierung und/oder freie Ausrichtung der beiden Bearbeitungsköpfe 11, 21 als auch eine voneinander unabhängige Aktivierung oder Steuerung von Antrieben zum Drehen der entsprechenden Werkzeugspindeln 12, 22 dient insbesondere der gleichzeitigen Durchführung zweier Wälzschälprozesse ein und desselben Werkstücks 5. Grundsätzlich kann die freie Positionierbarkeit und/oder freie Ausrichtbarkeit als auch die voneinander unabhängige Ansteuerung der Werkzeugspindeln 12, 22 auf unterschiedlichste und vielfältigste Art und Weise erreicht werden.

Im vorliegenden Ausführungsbeispiel ist der erste Bearbeitungskopf 11 über eine Positioniereinrichtung 14 verschiebbar an einem Träger 10 gelagert. Der zweite Bearbeitungskopf 21 ist ebenso über eine dementsprechende Positioniereinrichtung 24 an einem zweiten Träger 20 gelagert. Der erste Träger 10 ist bezüglich einer zweiten Richtung (y) relativ zur Basis 2 verschiebbar gelagert. Gleichermaßen ist auch der zweite Träger 20 in Bezug auf die zweite Richtung (y) verschiebbar an der Basis 2 gelagert.

Der erste Träger 10 ist typischerweise über eine dementsprechende Positioniereinrichtung 16 entlang der zweiten Richtung (y) an der Basis 2 gelagert. Gleichermaßen ist der zweite Träger 20 über eine weitere Positioniereinrichtung 26 entlang der zweiten Richtung (y) verschiebbar an der Basis 2 angeordnet. Die Positioniereinrichtungen 16, 26 können als Schiebeführungen ausgestaltet sein. Entsprechende und miteinander in Eingriff stehende Führungsschienen können hierbei aufseiten der Träger 10, 20 als auch aufseiten der Basis 2 vorgesehen sein.

Die Positioniereinrichtungen 16, 26 können insbesondere mit einem Antrieb, typischerweise mit einem elektrischen Antrieb versehen sein, mittels welchem oder mittels welchen die Träger 10, 20 unabhängig voneinander relativ zur Basis 2 entlang der zweiten Richtung (y) mittels der Steuerung 50 bewegbar sind. Die Steuerung 50 ist insbesondere mit den elektrischen Antrieben gekoppelt, um eine entsprechend geforderte Verschiebebewegung der Träger 10, 20 relativ zur Basis 2 als auch relativ zueinander zu verwirklichen.

Die Positioniereinrichtungen 16, 26 sind vorliegend als eindimensionale Schiebeführungen ausgestaltet, mittels welchen die Träger 10, 20 lediglich entlang der zweiten Richtung (y) relativ zur Basis 2 bewegt werden können. Grundsätzlich ist aber auch denkbar, dass die Positioniereinrichtungen 16, 26 als zweidimensionale Positioniereinrichtung ausgestaltet, beispielsweise als Kreuzschlitten implementiert sind.

Die Bearbeitungsköpfe 11, 21 sind gleichermaßen über entsprechende Positioniereinrichtungen 14, 24 verschiebbar bzw. beweglich an den jeweiligen Trägern 10, 20 gelagert. So ist der erste Bearbeitungskopf 11 mittels der Positioniereinrichtung 14 bezüglich der ersten Richtung (x) und der dritten Richtung (z) jeweils längsverschieblich an dem ersten Träger 10 verschiebbar gelagert. Gleichermaßen ist auch die Positioniereinrichtung 24 als zweidimensionale Positioniereinrichtung ausgestaltet. Mittels der Positioniereinrichtung 24 ist der zweite Bearbeitungskopf 21 hinsichtlich der ersten Richtung (x) und hinsichtlich der dritten Richtung (z) verschiebbar an dem Träger 20 angeordnet.

Die Positioniereinrichtungen 14, 24 weisen hierbei jeweils einen, beispielsweise am Träger 10, 20 angeordneten Schlitten 15, 25 auf. Der Schlitten 15, 25 kann insbesondere als Kreuzschlitten implementiert oder ausgebildet sein, sodass der erste Bearbeitungskopf 21 bezüglich der ersten Richtung (x) und bezüglich der dritten Richtung (z) verfahrbar bzw. verschiebbar an dem ersten Träger 10 gelagert ist. Gleichermaßen kann der zweite Bearbeitungskopf 21 über bzw. mittels des Schlittens 25 der Positioniereinrichtung 24 entlang der ersten Richtung (x) und entlang der dritten Richtung (z) längsverschieblich an dem Träger 20 gelagert sein.

Die signaltechnische Verbindung zwischen der zentralen Steuerung 50 mit den Positioniereinrichtungen 14, 16, 24, 26 ist vorliegend nicht explizit dargestellt. Aus Gründen der Übersichtlichkeit ist auch der wechselseitige Eingriff von Führungsschienen der Schlitten 15, 25 mit entsprechenden Führungselementen aufseiten der Bearbeitungsköpfe 11, 21 nicht explizit gezeigt. Die Positioniereinrichtungen 14, 16, 24, 26 sind typischerweise mit kommerziell erhältlichen Führungsschienen bzw. motorisch angetriebenen Schiebeführungen verwirklicht.

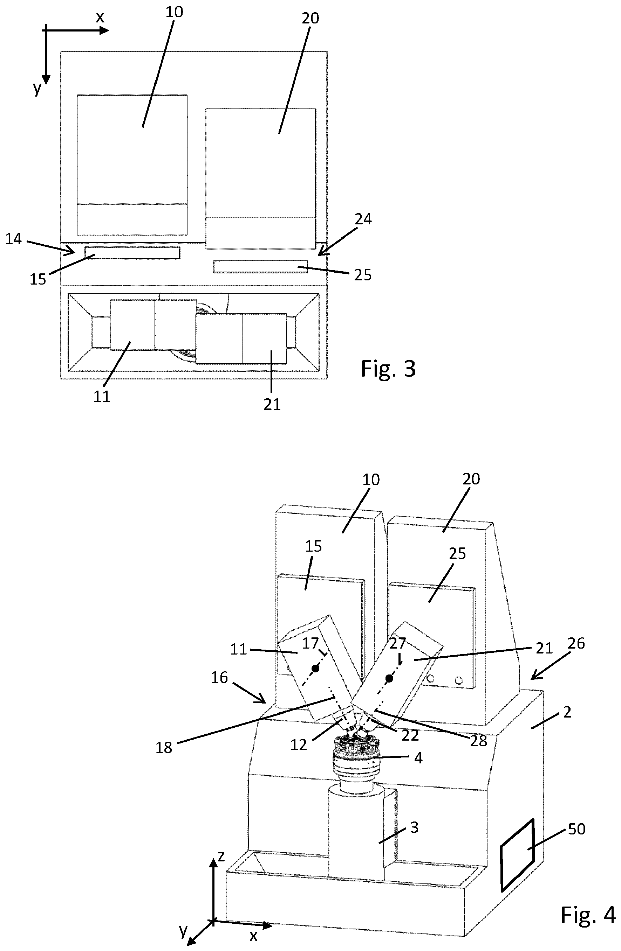

Wie ferner in den Fig. 1, 2 und 4 dargestellt, ist der erste Bearbeitungskopf 11 bezüglich einer ersten Schwenkachse 17 drehbar bzw. schwenkbar an dem Träger 10 und damit auch relativ zur Basis 2 gelagert. Gleichermaßen ist auch der zweite Bearbeitungskopf 21 bezüglich einer zweiten Schwenkachse 27 drehbar bzw. schwenkbar an dem zweiten Träger 20 und damit auch relativ zur Basis 2 gelagert. Mittels der drehbaren Lagerung bezüglich der ersten und der zweiten Schwenkachse 17, 27 kann die jeweilige erste und zweite Werkzeugachse 18, 28 der ersten und zweiten Bearbeitungsköpfe 11, 21 variabel und bedarfsgerecht verändert werden.

Dies ermöglicht insbesondere eine freie Positionierbarkeit bzw. freie Ausrichtbarkeit von erstem und zweitem Bearbeitungskopf 11, 21 relativ zueinander als auch relativ zur Basis 2. Die Schwenkachsen 17, 27 sind typischerweise jeweils mit einem eigenen Antrieb gekoppelt, welcher signaltechnisch mit der Steuerung 50 verbunden ist.

In Fig. 1 ist ein erster Spindelantrieb 13, welche drehmomentübertragend mit der ersten Werkstückspindel 12 gekoppelt ist gezeigt. Ferner verfügt der zweite Bearbeitungskopf 21 über einen zweiten Spindelantrieb 23, welcher drehmomentübertragend mit der zweiten Werkstückspindel 22 gekoppelt ist.

In Fig. 1 ist ferner exemplarisch eine erste Antriebseinheit 19 des ersten Bearbeitungskopf 11 und eine zweite Antriebseinheit 29 des zweiten Bearbeitungskopfs 21 gezeigt. Die Antriebseinheiten 19, 29 als auch die Spindelantriebe 13, 23 sind signalübertragend mit der Steuerung 50 verbunden. Die Antriebseinheiten 19, 29 stehen stellvertretend für sämtliche Antriebe der Träger 10, 20 sowie der Bearbeitungsköpfe 11, 21, um diese in jedwede geforderten Position oder Ausrichtung zu überführen und mit geforderten Geschwindigkeiten während der Bearbeitungsprozesse zu bewegen.

Die Spindelantriebe 9, 13, 23 sind ebenfalls signalübertragend mit der Steuerung 50 verbunden. Die Steuerung 50 kann somit die Drehzahlen der Werkstückspindel 4, der ersten Werkzeugspindeln 12 und der zweiten Werkzeugspindel 22 individuell und bedarfsgerecht Regeln und Steuern.

Der vorliegend nicht gezeigte Antrieb der Schwenkachsen 17, 27 ermöglicht ein motorisches und mittels der Steuerung 50 kontrollierbares Verschwenken der Bearbeitungsköpfe 11, 21 bezüglich der jeweiligen Schwenkachsen 17, 27.

Mittels der in den Fig. 1 bis 4 gezeigten Vorrichtung 1 können unterschiedliche oder gleiche Verzahnungen ein und desselben Werkstücks 5 gleichzeitig, zumindest aber zeitlich überlappend bearbeitet bzw. gefertigt werden.

In den Fig. 5 bis 7 ist ein wechselseitiger Eingriff zweier Bearbeitungswerkzeuge 30, 40 mit ein und demselben Werkstück 5 gezeigt. Das erste Bearbeitungswerkzeug 30 ist in die erste Werkzeugspindel 12 eingespannt. Das erste Bearbeitungswerkzeug 30 weist eine erste Werkzeugverzahnung 31 und eine axial hierzu versetzte zweite Werkzeugverzahnung 32 auf. Bei den ersten und zweiten Werkzeugverzahnungen 31, 32 handelt es sich typischerweise um unterschiedliche Verzahnungen. Diese können sich hinsichtlich ihrer Zähnezahl, ihrer Zahngeometrie, Zahnausrichtung als auch hinsichtlich ihres Radius oder ihrer Axialerstreckung voneinander unterscheiden. In ähnlicher Art und Weise weist auch das zweite Bearbeitungswerkzeug 40, welches an der zweiten Werkzeugspindel 22 angeordnet ist, eine erste Werkzeugverzahnung 41 und eine zweite Werkzeugverzahnung 42 auf. Auch diese Verzahnungen 41, 42 sind axial versetzt zueinander am Bearbeitungswerkzeug 40 ausgebildet oder angeordnet.

Das zu bearbeitende Werkstück 5 weist einen ersten Abschnitt 53 und einen zweiten Abschnitt 54 auf. Im Bereich des ersten Abschnitts 53 befindet sich eine erste Verzahnung 51, welche mittels dem zweiten Verzahnungsabschnitt 42 des zweiten Bearbeitungswerkzeugs 40 gefertigt wird. Der zweite Abschnitt 54 des Werkstücks 50 weist eine zweite Verzahnung 52 auf. Diese ist von der ersten Verzahnung 51 axial beabstandet, bzw. sie grenzt axial an die erste Verzahnung 51 an. Jene zweite Verzahnung 52 steht mit der ersten Werkzeugverzahnung 31 des ersten Bearbeitungswerkzeugs 30 in Eingriff und wird von diesem ersten Bearbeitungswerkzeug 30 erzeugt oder bearbeitet.

In den Fig. 5 bis 7 ist insbesondere zu erkennen, dass die beiden Bearbeitungswerkzeuge 30, 40 in einem vorgegebenen radialen Abstand zueinander an etwa radial gegenüberliegenden bzw. diametral gegenüberliegenden Außenseiten des Werkstücks 5 zur Anlage gelangen bzw. mit dementsprechenden Abschnitten 53, 54 des Werkstücks 5 gleichzeitig bzw. zeitlich überlappend in Eingriff stehen. Die Werkzeugverzahnungen 31, 42, welche zeitgleich mit axial versetzten Abschnitten 54, 53 des Werkstücks 5 in Eingriff stehen, führen typischerweise jeweils einen wälzschälenden Bearbeitungsprozess aus. Die beiden Bearbeitungswerkzeuge 30, 40 werden dabei von den jeweiligen Bearbeitungsköpfen 11, 21 mittels der Steuerung 50 programmgesteuert geführt.

Da die beiden Wälzschälprozesse gleichzeitig stattfinden, sind die dynamischen Steuerungsparameter der jeweiligen Bearbeitungsköpfe 11, 21, bzw. ihrer Werkzeugspindeln 12, 22 gemäß der nachfolgenden Beziehung mit den oben bereits genannten Variablen aufeinander abzustimmen:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right).$$

Die Steuerung 50, welche sowohl mit dem Antrieb der Werkstückspindel 4 als auch mit sämtlichen Antrieben der Bearbeitungsköpfe 11, 21 und der zugehörigen Werkzeugspindeln 12, 22 signaltechnisch verbunden ist, kann eine entsprechende Bewegungskopplung der beiden Werkzeugspindeln 12, 22 bzw. der jeweiligen Bearbeitungsköpfe 11, 21 vornehmen.

In der Darstellung gemäß Fig. 5 sind ferner auch die Achskreuzwinkel $\Sigma_1$ bzw. $\Sigma_2$ gezeigt. Der Achskreuzwinkel $\Sigma_1$ erstreckt sich zwischen der Drehachse der Werkstückspindel 4 und der ersten Werkzeugachse 18. Der Achskreuzwinkel $\Sigma_2$ erstreckt sich zwischen der Drehachse der Werkstückspindel 4 und der zweiten Werkzeugachse 28, wie in Fig. 5 angedeutet.

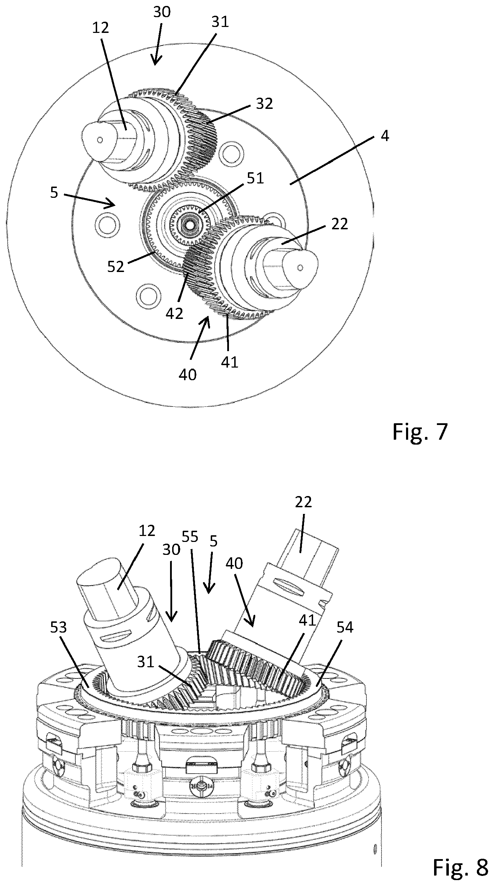

In den Fig. 7 bis 9 ist ein weiteres Ausführungsbeispiel dargestellt, bei welchem die beiden Bearbeitungsköpfe 11, 21, mithin deren daran angeordneten Bearbeitungswerkzeuge 30, 40 gleichzeitig mit einer Innenverzahnung eines Werkstücks 5 wälzend, bzw. wälzschälend in Eingriff stehen. Erste und zweite Abschnitte 53, 54 des Werkstücks 5 befinden sich hier in einem radialen Abstand. Sie können sich insbesondere diametral gegenüberliegen, sodass beispielsweise das erste Bearbeitungswerkzeug 30 mit einer ersten Werkzeugverzahnung 31 mit dem ersten Abschnitt 53 in Eingriff steht und das zweite Bearbeitungswerkzeug 40 mit seiner zweiten Werkzeugverzahnung 41 mit einem ebenfalls innenliegenden zweiten Abschnitt 54 der Innenverzahnung 55 des Werkstücks 5 in Eingriff steht. Hierbei können die beiden Abschnitte 53, 54 zueinander gegenüberliegend an der Innenverzahnung 55 angeordnet sein.

Der gleichzeitige Eingriff zweier Bearbeitungswerkzeuge 30, 40 mit ein und derselben Verzahnung 55 kann die gesamte Bearbeitung, mithin den Bearbeitungsprozess zur Fertigung der Innenverzahnung 55 beschleunigen. Dies ist gleichermaßen natürlich auch auf Außenverzahnungen anwendbar.

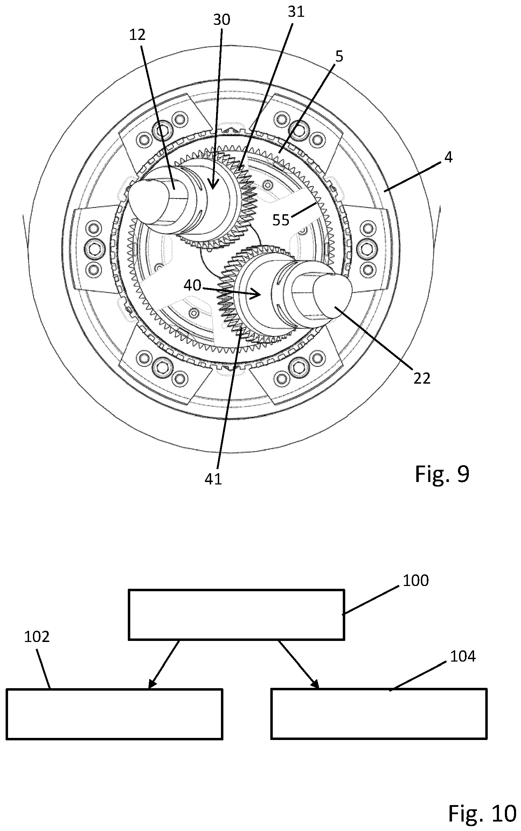

Im Flussdiagramm der Fig. 10 ist das Verfahren zur gleichzeitigen wälzschälenden Bearbeitung ein und desselben Werkstücks 5 schematisch dargestellt. In einem ersten Schritt 100 wird das zu verzahnende Werkstück 5 an einer, um eine erste Achse (A) drehbar gelagerten Werkstückspindel 4 einer zuvor beschriebenen Vorrichtung 1 angeordnet. Im nachfolgenden Schritt 102 erfolgt eine Wälzschälbearbeitung zumindest eine ersten Abschnitts 53 des Werkstücks 5 mittels eines ersten Bearbeitungswerkzeugs 30. Das erste Bearbeitungswerkzeug 30 ist dabei an der ersten Werkzeugspindel 12 eines ersten Bearbeitungskopfs 11 angeordnet.

Der erste Bearbeitungskopf 11 bzw. die erste Werkzeugspindel 12 als auch die Werkzeugspindel 4 werden von der Steuerung 50 programmgesteuert angetrieben bzw. gesteuert. Gleichzeitig erfolgt in einem weiteren Schritt 104 eine Bearbeitung eines zweiten Abschnitts 54 des Werkstücks 5 mittels des zweiten Bearbeitungswerkzeugs 40. Das zweite Bearbeitungswerkzeug 40 ist an dem zweiten Bearbeitungskopf 21 angeordnet.

Der zweite Bearbeitungskopf 21 wird hierbei relativ zum ersten Bearbeitungskopf 11 und unabhängig vom ersten Bearbeitungskopf 11 variabel positioniert und/oder variabel ausgerichtet, um den zweiten Abschnitt 54 des Werkstücks zu bearbeiten. Von Vorteil findet in beiden Schritten 104, 102 zeitgleich oder zumindest zeitlich überlappend ein erster Wälzschälprozess und ein zweiter Wälzschälprozess statt.

Bezugszeichenliste

1  Verzahnvorrichtung
2  Basis

| 3 | Werkstückträger |
|---|---|
| 4 | Werkstückspindel |
| 9 | Spindelantrieb |
| 10 | Träger |
| 11 | Bearbeitungskopf |
| 12 | Werkzeugspindel |
| 13 | Spindelantrieb |
| 14 | Positioniereinrichtung |
| 15 | Schlitten |
| 16 | Positioniereinrichtung |
| 17 | Schwenkachse |
| 18 | Werkzeugachse |
| 19 | Antriebseinheit |
| 20 | Träger |
| 21 | Bearbeitungskopf |
| 22 | Werkzeugspindel |
| 23 | Spindelantrieb |
| 24 | Positioniereinrichtung |
| 25 | Schlitten |
| 26 | Positioniereinrichtung |
| 27 | Schwenkachse |
| 28 | Werkzeugachse |
| 29 | Antriebseinheit |
| 30 | Bearbeitungswerkzeug |
| 31 | Verzahnung |
| 32 | Verzahnung |
| 40 | Bearbeitungswerkzeug |
| 41 | Verzahnung |
| 42 | Verzahnung |
| 50 | Steuerung |
| 51 | Verzahnung |
| 52 | Verzahnung |
| 53 | Abschnitt |
| 54 | Abschnitt |
| 55 | Verzahnung |

**Patentansprüche**

1. Vorrichtung zur Bearbeitung eines Werkstücks (5), wobei die Vorrichtung (1) folgendes umfasst:

    - eine Basis (2),
    - eine um eine erste Achse (z) drehbar gelagerte Werkstückspindel (4) zur Aufnahme des Werkstücks (5),
    - einen ersten Bearbeitungskopf (11) mit einer bezüglich einer ersten Werkzeugachse (18) drehbar gelagerten ersten Werkzeugspindel (12) zur Aufnahme eines ersten Bearbeitungswerkzeugs (30),
    - einen zweiten Bearbeitungskopf (21) zur Aufnahme eines zweiten Bearbeitungswerkzeugs (40),
    - wobei zumindest der mit dem ersten Bearbeitungswerkzeug (30) bestückbare erste Bearbeitungskopf (11) zur Wälzschälbearbeitung des Werkstücks (5) ausgebildet ist, und
    - wobei der zweite Bearbeitungskopf (21) relativ zum ersten Bearbeitungskopf (11) und unabhängig vom ersten Bearbeitungskopf (11) variabel positionierbar und/oder variabel ausrichtbar ist.

2. Vorrichtung nach Anspruch 1, wobei der zweite Bearbeitungskopf (21) relativ zum ersten Bearbeitungskopf (11) frei positionierbar und/oder frei ausrichtbar ist.

3. Vorrichtung nach einem der vorhergehenden Ansprüche, wobei der erste Bearbeitungskopf (11) und der zweite Bearbeitungskopf (21) bezüglich einer ersten Richtung (x) unabhängig voneinander verschiebbar an der Basis (2) angeordnet sind.

4. Vorrichtung nach Anspruch 3, wobei der erste Bearbeitungskopf (11) und der zweite Bearbeitungskopf (21) bezüglich einer zweiten Richtung (y) unabhängig voneinander verschiebbar an der Basis (2) angeordnet sind.

5. Vorrichtung nach Anspruch 3 oder 4, wobei der erste Bearbeitungskopf (11) und der zweite Bearbeitungskopf (21) bezüglich einer dritten Richtung (z) unabhängig voneinander verschiebbar an der Basis (2) angeordnet sind.

6. Vorrichtung nach einem der vorhergehenden Ansprüche, wobei der erste Bearbeitungskopf (11) bezüglich einer im Wesentlichen senkrecht zur ersten Werkzeugachse (18) verlaufenden ersten Schwenkachse (17) schwenkbar gelagert ist.

7. Vorrichtung nach einem der vorhergehenden Ansprüche, wobei der zweite Bearbeitungskopf (21) bezüglich einer im Wesentlichen senkrecht zur zweiten Werkzeugachse (28) verlaufenden zweiten Schwenkachse (27) schwenkbar gelagert ist.

8. Vorrichtung nach einem der vorhergehenden Ansprüche, wobei der erste Bearbeitungskopf (11) mit dem ersten Bearbeitungswerkzeug (30) mit einem ersten Abschnitt (53) des Werkstücks (5) in Eingriff bringbar ist und wobei der zweite Bearbeitungskopf (21) mit dem zweiten Bearbeitungswerkzeug (40) mit einem zweiten Abschnitt (54) des Werkstücks (5) gleichzeitigen Eingriff bringbar ist, wobei der erste Abschnitt (53) und der zweite Abschnitt (54) des Werkstücks (5) bezogen auf die erste Achse (z) axial und/oder radial versetzt zueinander sind.

9. Vorrichtung nach einem der vorhergehenden Ansprüche, wobei der zweite Bearbeitungskopf (21) eine zweite, bezüglich einer zweiten Werkzeugachse (28) drehbar gelagerte zweite Werkzeugspindel (22) zur Aufnahme des zweiten Bearbeitungswerkzeugs (40) aufweist.

10. Vorrichtung nach Anspruch 9, wobei der mit dem zweiten Bearbeitungswerkzeug (40) bestückbare zweite Bearbeitungskopf (21) zur Wälzschälbearbeitung des Werkstücks (5) ausgebildet ist.

11. Vorrichtung nach Anspruch 10, wobei der erste Bearbeitungskopf (11) und der zweite Bearbeitungskopf (21) zur gleichzeitigen Wälzschälbearbeitung des Werkstücks (5) ausgebildet sind.

12. Vorrichtung nach Anspruch 10 oder 11, ferner mit einer Steuerung (50) zur Steuerung des ersten Bearbeitungskopfs (11) und des zweiten Bearbeitungskopfs (21) derart, dass folgende Wechselbeziehung gilt:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right),$$

mit:

$n_c$: *Drehzahl der Werkstückachse*
$n_a$: *Drehzahl der 1. Werkzeugspindel*
$n_b$: *Drehzahl der 2. Werkzeugspindel*
$z_a$: *Zähnezahl des 1. Wälzschälwerkzeugs*
$z_b$: *Zähnezahl des 2. Wälzschälwerkzeugs*
$z_1$: *Zähnezahl der 1. Verzahung des Werkstücks*
$z_2$: *Zähnezahl der 2. Verzahung des Werkstücks*
$v_{z1}$: *Vorschubgeschwindigkeit der Axialachse (z) der 1. Werkzeugspindel*
$v_{z2}$: *Vorschubgeschwindigkeit der Axialachse (z) der 2. Werkzeugspindel*

$$u_{dzi} = Axial - Differential - Konstante = \sin\left(\frac{\beta_i}{m_{ni} * \pi}\right); mit\ i = 1, 2$$

wobei i = 1 das erste Wälzschälwerkzeug, bzw. die erste Verzahnung des Werkstücks und i=2 das zweite Wälzschälwerkzeug, bzw. die zweite Verzahnung des Werkstücks bezeichnet und wobei:

$\beta_i$: *Schrägungswinkel der Zähne des Werkstücks i*
$m_{ni}$: *Normalmodul der Verzahnung i.*

**13.** Verfahren zur Bearbeitung eines Werkstücks (5), umfassend die folgenden Schritte:

- Anordnen eines zu bearbeitenden Werkstücks (5) an einer um eine erste Achse (z) drehbar gelagerten Werkstückspindel (4) einer Vorrichtung (1) zur Werkstückbearbeitung,
- Wälzschälbearbeitung zumindest eines ersten Abschnitts (53) des Werkstücks (5) mittels eines ersten Bearbeitungswerkzeugs (30), welches an einer ersten Werkzeugspindel (12) eines ersten Bearbeitungskopfs (11) angeordnet ist,
- gleichzeitige Bearbeitung eines zweiten Abschnitts (54) des Werkstücks (5) mittels eines zweiten Bearbeitungswerkzeugs (40), welches an einem zweiten Bearbeitungskopf (21) angeordnet ist, wobei der zweite Bearbeitungskopf (21) relativ zum ersten Bearbeitungskopf (11) und unabhängig vom ersten Bearbeitungskopf (11) variabel positioniert und/oder variabel ausgerichtet wird.

**14.** Verfahren nach Anspruch 13, wobei der zweite Abschnitt (54) des Werkstücks (5) mittels des zweiten Bearbeitungswerkzeugs (40), welches an einer zweiten Werkzeugspindel (22) des zweiten Bearbeitungskopfs (21) angeordnet ist, wälzschälend bearbeitet wird und wobei der erste Bearbeitungskopf (11), die erste Werkzeugspindel (12), der zweite Bearbeitungskopf (21), die zweite Werkzeugspindel (22) und die Werkstückspindel (4) mittels einer Steuerung (50) gleichzeitig derart angesteuert werden, dass folgende Wechselbeziehung gilt:

$$n_c = n_b * \left(\frac{z_b}{z_2}\right) + v_{z2} * \left(\frac{u_{dz2}}{z_2}\right) = n_a * \left(\frac{z_a}{z_1}\right) + v_{z1} * \left(\frac{u_{dz1}}{z_1}\right)$$

**15.** Computerprogrammprodukt zur Steuerung einer Vorrichtung (1) zur Bearbeitung eines Werkstücks (5), wobei die Vorrichtung (1) eine um eine erste Achse (A) drehbar gelagerte Werkstückspindel (4) zur Aufnahme des Werkstücks (5), sowie einen ersten und einen zweiten Bearbeitungskopf (11, 21) aufweist, wobei der erste Bearbeitungskopf (11) eine bezüglich einer ersten Werkzeugachse (18) drehbar gelagerte erste Werkzeugspindel (12) zur Aufnahme eines ersten Bearbeitungswerkzeugs (30) aufweist, wobei der zweite Bearbeitungskopf (21) zur Aufnahme eines zweiten Bearbeitungswerkzeugs (40) ausgebildet ist und wobei das Computerprogramm Befehle umfasst, die bei Ausführung des Programms auf einem Computer oder einer Steuerung (50) der Vorrichtung (1) zum Bearbeiten von Werkstücken (5) den Computer oder die betreffende Steuerung (50) dazu veranlassen,

- den ersten Bearbeitungskopf (11) mit dem daran angeordneten Bearbeitungswerkzeug (30) wälzschälend mit einem ersten Abschnitt (53) des Werkstücks (5) in Eingriff zu bringen und einen ersten Wälzschälprozess durchzuführen,
- und gleichzeitig oder zeitlich überlappend hierzu, einen zweiten Abschnitt (54) des Werkstücks (5) mittels des zweiten Bearbeitungswerkzeugs (40) zu bearbeiten und dabei den zweiten Bearbeitungskopf (21) relativ zum ersten Bearbeitungskopf (11) und unabhängig vom ersten Bearbeitungskopf (11) variabel zu positionieren und/oder variabel auszurichten.

Fig. 1

Fig. 2

Fig. 3

Fig. 4

Fig. 5

Fig. 6

Fig. 7

Fig. 8

Fig. 9

Fig. 10

**Europäisches Patentamt**
**European Patent Office**
**Office européen des brevets**

# EUROPÄISCHER RECHERCHENBERICHT

**Nummer der Anmeldung**

EP 21 15 9594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 218082 B4 (FELSOMAT GMBH & CO KG [DE]) 10. November 2016 (2016-11-10) * Absätze [0023], [0051]; Abbildung 1 * | 1-11,13, 15 | INV. B23Q39/02 B23F5/16 B23F21/00 |
| X | DE 10 2018 103600 A1 (AISIN SEIKI KK) 23. August 2018 (2018-08-23) | 1-11 | |
| A | * Absätze [0013], [0038]; Abbildung 1 * | 13,15 | |
| X | EP 1 270 145 A2 (TRAUB DREHMASCHINEN GMBH [DE]) 2. Januar 2003 (2003-01-02) * Absätze [0150], [0157], [0206], [0207] * | 1-4,6-9 | |
| X | WO 2010/079113 A2 (PROFILATOR GMBH & CO KG [DE]; PROCK ERICH [DE]; SOBCZYK MARCEL [DE]) 15. Juli 2010 (2010-07-15) * Seite 6, Zeile 18 - Zeile 26; Anspruch 1; Abbildung 8 * | 1-4,6,7, 9 | |
| X | DE 10 2018 003935 A1 (EMAG GMBH & CO KG [DE]) 21. November 2019 (2019-11-21) | 1-11 | |
| A | * Absätze [0003], [0005]; Ansprüche 1,3,7; Abbildungen 1,2 * | 12-15 | RECHERCHIERTE SACHGEBIETE (IPC) B23Q B23F |
| X | DE 298 15 125 U1 (PRAEWEMA ANTRIEBSTECHNIK GMBH [DE]; BUDERUS SCHLEIFTECHNIK [DE]) 12. November 1998 (1998-11-12) | 1,6-11 | |
| A | * Absätze [0035], [0037], [0042]; Abbildung 1 * | 13,15 | |
| A | EP 2 766 142 A1 (BOURN & KOCH INC [US]) 20. August 2014 (2014-08-20) * Absätze [0030], [0060], [0062] - [0064]; Abbildungen 1,11 * | 1,3,8,9, 12,15 | |

-/--

Der vorliegende Recherchenbericht wurde für alle Patentansprüche erstellt

| Recherchenort | Abschlußdatum der Recherche | Prüfer |
|---|---|---|
| Den Haag | 15. Juli 2021 | Carmichael, Guy |

EPO FORM 1503 03.82 (P04C03)

Seite 1 von 2

Europäisches
Patentamt

European
Patent Office

Office européen
des brevets

**EUROPÄISCHER RECHERCHENBERICHT**

**Nummer der Anmeldung**

EP 21 15 9594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 308 626 A1 (HOEFLER MASCHB GMBH [DE]) 13. April 2011 (2011-04-13) * Absätze [0047] - [0049]; Abbildungen 1,4 * ----- | 1 | |
| A | WO 2010/075600 A1 (MIBA SINTER AUSTRIA GMBH [AT]; MUELLER ALEXANDER [AT] ET AL.) 8. Juli 2010 (2010-07-08) * Abbildungen 2-4 * ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 15. Juli 2021 | Carmichael, Guy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 21 15 9594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2021

| Im Recherchenbericht angeführtes Patentdokument | Datum der Veröffentlichung | Mitglied(er) der Patentfamilie | Datum der Veröffentlichung |
|---|---|---|---|
| DE 102014218082 B4 | 10-11-2016 | CN 106687241 A<br>DE 102014218082 A1<br>EP 3191248 A1<br>ES 2835600 T3<br>US 2017173713 A1<br>WO 2016037903 A1 | 17-05-2017<br>10-03-2016<br>19-07-2017<br>22-06-2021<br>22-06-2017<br>17-03-2016 |
| DE 102018103600 A1 | 23-08-2018 | DE 102018103600 A1<br>JP 6794868 B2<br>JP 2018134690 A<br>US 2018236576 A1 | 23-08-2018<br>02-12-2020<br>30-08-2018<br>23-08-2018 |
| EP 1270145 A2 | 02-01-2003 | KEINE | |
| WO 2010079113 A2 | 15-07-2010 | DE 102009003338 A1<br>EP 2385885 A2<br>PL 2385885 T3<br>US 2011268524 A1<br>US 2014050546 A1<br>WO 2010079113 A2 | 15-07-2010<br>16-11-2011<br>30-06-2014<br>03-11-2011<br>20-02-2014<br>15-07-2010 |
| DE 102018003935 A1 | 21-11-2019 | KEINE | |
| DE 29815125 U1 | 12-11-1998 | DE 19753797 A1<br>DE 29815125 U1 | 17-06-1999<br>12-11-1998 |
| EP 2766142 A1 | 20-08-2014 | EP 2766142 A1<br>ES 2731749 T3<br>US 2013094917 A1<br>WO 2013055768 A1 | 20-08-2014<br>18-11-2019<br>18-04-2013<br>18-04-2013 |
| EP 2308626 A1 | 13-04-2011 | DE 102009048416 B3<br>EP 2308626 A1 | 12-05-2011<br>13-04-2011 |
| WO 2010075600 A1 | 08-07-2010 | AT 507738 A1<br>CA 2746785 A1<br>CN 102317004 A<br>EP 2367646 A1<br>JP 5360624 B2<br>JP 2012512034 A<br>US 2011232092 A1<br>WO 2010075600 A1 | 15-07-2010<br>08-07-2010<br>11-01-2012<br>28-09-2011<br>04-12-2013<br>31-05-2012<br>29-09-2011<br>08-07-2010 |

EPO FORM P0461

Für nähere Einzelheiten zu diesem Anhang : siehe Amtsblatt des Europäischen Patentamts, Nr.12/82